# NEUE EUROPÄISCHE PATENTSCHRIFT

(11) **EP 2 857 645 B2**
(45) Veröffentlichungstag und Bekanntmachung des Hinweises auf die Entscheidung über den Einspruch: **09.01.2019**
(45) Hinweis auf die Patenterteilung: 03.08.2016
(21) Anmeldenummer: 13187089.1
(22) Anmeldetag: 02.10.2013
(51) Int. Cl.: F01N 3/20

(54) **Behälter für Harnstofflösung und Verfahren zur Herstellung eines solchen Behälters**
Container for urea solution and method for manufacturing such a container
Récipient pour solution d'urée et procédé de fabrication d'un tel récipient

(43) Veröffentlichungstag der Anmeldung: 08.04.2015
(73) Patentinhaber: Magna Steyr Fuel Systems GmbH, 41516 Grevenbroich (DE)
(72) Erfinder: Gross, Jörg, 50389 Wessling (DE)
(74) Vertreter: Zangger, Bernd

(56) Entgegenhaltungen:
- EP-A1- 1 640 577
- EP-A1- 2 172 629
- EP-A1- 2 319 719
- EP-A1- 2 554 813
- EP-A1- 2 711 224
- EP-A1- 2 845 761
- DE-A1-102010 039 042
- DE-U1-202011 000 201
- US-A1- 2012 138 606
- US-A1- 2012 225 396

## Beschreibung

### Gebiet der Erfindung

Die vorliegende Erfindung betrifft einen Behälter für eine Harnstofflösung, umfassend eine Oberschale und eine Unterschale sowie eine zum Temperieren der Harnstofflösung ausgebildete Heizung sowie ein Verfahren zur Herstellung eines solchen Behälters.

### Stand der Technik

Im Stand der Technik weisen solche Behälter in der Oberschale und in der Unterschale Versteifungsrippen auf, die längs oder quer zur Bodenfläche bzw. Abdeckfläche verlaufen, wobei die Versteifungsrippen ein Durchhängen dieser Flächen des Behälters vermeiden sollen.

Das hat aber den Nachteil, dass nicht die gesamte Flüssigkeitsmenge aus dem Behälter abgesaugt werden kann.

Aus der DE 3213070 A1 ist ein Kraftstofftank bekannt welcher den einander gegenüberliegenden Hauptwandungen ausgehende in das Innere des Tanks ragende Sicken aufweist, die einander berühren und so eine innere Wandung darstellen.

In der DE 19627741 A1 wird ein Kraftstoffbehälter beschrieben, wobei zur Einhaltung eines genauen Abstands zwischen der oberen Abschlusswand und dem Boden im Kraftstoffbehälter auf Anschlag gehende Abstandshalter vorgesehen sind.

Auch die EP21722629 offenbart einen hergestellten Behälter.

### Zusammenfassung der Erfindung

Es ist eine Aufgabe der Erfindung, einen Behälter derart zu verbessern, dass der Behälter eine höhere Steifigkeit aufweist, wobei nahezu die gesamte Flüssigkeit des Behälters genutzt werden kann und ein Verfahren zur Herstellung eines solchen Behälters anzugeben.

Gelöst wird diese Aufgabe durch die Merkmale von Anspruch 1 und 8. Weiterbildungen der Erfindung sind Gegenstand der Unteransprüche.

Die Lösung der Aufgabe erfolgt durch einen Behälter für eine Harnstofflösung, umfassend eine Oberschale und eine Unterschale sowie eine zum Temperieren der Harnstofflösung ausgebildete Heizung, wobei die Oberschale obere säulenartige Strukturen aufweist, und wobei die Unterschale untere säulenartige Strukturen aufweist, wobei die oberen säulenartigen Strukturen und die unteren säulenartigen Strukturen sich gegenüberliegend angeordnet sind, so dass durch das Fügen der Oberschale und der Unterschale die sich gegenüberliegenden oberen säulenartigen Strukturen und die unteren säulenartigen Strukturen, zur Erhöhung der Steifigkeit des Behälters, dauerhaft miteinander verbunden sind, wobei die unteren säulenartigen Strukturen im Bereich der Heizung angeordnet sind, wobei die unteren säulenartigen Strukturen in gleichmäßigen Abständen um die Heizung verteilt sind.

Solche Behälter mit einer Harnstofflösung sind bevorzugt in Kraftfahrzeugen angeordnet, wobei die Harnstofflösung zur Abgasreinigung einem Katalysator zuführbar ist.

Erfindungsgemäß werden mehrere obere säulenartige Strukturen und mehrere untere säulenartige Strukturen zur Versteifung des Behälters vorgesehen. Die säulenartigen Strukturen sind so ausgebildet und in der Oberschale bzw. Unterschale so angeordnet, dass ein Durchhängen des Bodens der Unterschale bzw. der Abdeckfläche der Oberschale auf ein Minimum reduziert wird.

Die Heizung ist erforderlich, da die Harnstofflösung bei ca. -11°C zu gefrieren beginnen kann. Die Heizung gewährleistet, dass die Harnstofflösung flüssig bleibt und auch bei tiefen Temperaturen aus dem Behälter gefördert werden kann. Aufgrund des freien Zirkulierens von geheizter Harnstofflösung in der Unterschale ohne Versteifungsrippen kann der Heizvorgang effizienter durchgeführt werden. Die unteren säulenartigen Strukturen sind in der Nähe der Heizung, wobei die Heizung vorteilhaft in der Unterschale untergebracht ist, angeordnet.

Weiterbildungen der Erfindung sind in den abhängigen Ansprüchen, der Beschreibung sowie den beigefügten Zeichnungen angegeben.

Vorzugsweise sind die Oberschale und die Unterschale aus Kunststoff hergestellt. Kunststoff hat den Vorteil, dass er leicht und kostengünstig ist.

Dabei ist die Oberschale und die Unterschale bevorzugt durch Spritzgießen hergestellt.

In solche Behälter kann man Einbauteile vor dem Spritzgießen in ihre Endposition einformen, so dass ein sonst aufwendiger Einbau durch beispielsweise eine Montageöffnung entfallen kann.

In einer bevorzugten Ausführungsform sind die Oberschale und die Unterschale sowie die sich gegenüberliegenden oberen säulenartigen Strukturen und die unteren säulenartigen Strukturen durch Verschweißen miteinander verbunden.

Die Oberschale und die Unterschale weisen dabei in einer erfinderischen Ausführungsform einen außenseitig des Behälters umlaufenden Flansch auf, der durch Erwärmen und anschließendes gegeneinander Drücken miteinander dauerhaft verbunden. Gleichzeitig werden dabei die oberen säulenartigen Strukturen und die unteren säulenartigen Strukturen miteinander verschweißt.

Gemäß einer weiteren Ausgestaltung der Erfindung ist die Heizung mittig im Boden der Unterschale angeordnet. Die Heizung sorgt dann besonders effizient dafür, dass die Harnstofflösung auch bei Minustemperaturen nicht einfrieren kann, da der maximale Abstand zur Außenwandung der Unterschale geringer ist, als wenn die Heizung an einem Randbereich der Unterschale angeordnet wäre.

Da durch die Erwärmung auch der Boden der Unterschale erwärmt wird, wird dieser weicher, wodurch sich der Boden, besonders bei vollem Behälter, verformen kann. Deshalb sind die unteren säulenartigen Strukturen im Bereich der Heizung angeordnet, um dieser Verformung gezielt entgegenzuwirken. Erfindungsgemäß sind die unteren säulenartigen Strukturen in gleichmäßigen Abständen um die Heizung verteilt, um so einer Verformung des Bodens der Unterschale am effizientesten entgegenwirken zu können.

Bevorzugt ist die Heizung in einem Fördermodul integriert.

Als Heizung wird bevorzugt ein PTC-Heizelement verwendet.

Gemäß einer Ausführungsform der Erfindung sind die oberen säulenartigen Strukturen und/oder die unteren säulenartigen Strukturen hohl ausgebildet. Dadurch kann eine Gewichstreduzierung erreicht werden, ohne dass die Strukturen an Steifigkeit verlieren.

Gemäß einer weiteren Ausführungsform der Erfindung sind die oberen säulenartigen Strukturen und/oder die unteren säulenartigen Strukturen integral mit der Oberschale und/oder Unterschale ausgebildet. Die säulenartigen Strukturen werden hierbei beim Spritzgießen der Oberschale bzw. Unterschale mitausgebildet.

Erfindungsgemäß wird ein Verfahren zur Herstellung eines Behälters für Harnstofflösung beschrieben, wobei das Verfahren im Wesentlichen folgende Schritte umfasst:
Bereitstellen einer Oberschale und einer Unterschale, wobei die Oberschale obere säulenartige Strukturen aufweist und wobei die Unterschale untere säulenartige Strukturen aufweist;
Fügen der Oberschale und der Unterschale, wobei die oberen säulenartigen Strukturen in Kontakt mit den unteren säulenartigen Strukturen gebracht werden, so dass die Oberschale und die Unterschale sowie die oberen säulenartigen Strukturen und die unteren säulenartigen Strukturen dauerhaft verbunden werden.

Die aus Kunststoff durch Spritzgießen hergestellte Oberschale und Unterschale werden dabei bevorzugt durch Verschweißen miteinander verbunden. Dabei werden die umlaufenden Flansche der Oberschale und der Unterschale bzw. die Kontaktflächen der oberen säulenartigen Strukturen sowie der unteren säulenartigen Strukturen mittels eines Heizelements erwärmt, wobei nach dem Erwärmen dass Heizelement entfernt wird und die erwärmten Flächen der Oberschale gegen die erwärmten Flächen der Unterschale gedrückt werden und so dauerhaft miteinander verbunden werden. Gleichzeitig werden dabei die oberen säulenartigen Strukturen und die unteren säulenartigen Strukturen miteinander verschweißt.

Die Heizung ist mittig im Boden der Unterschale angeordnet, wobei die Heizung in einer bevorzugten Ausführungsform vor dem Spritzgießen der Unterschale in eine Vorform eingelegt sein kann. Dadurch kann eine aufwendige nachträgliche Montage durch eine Montageöffnung entfallen.

### Kurzbeschreibung der Zeichnungen

Die Erfindung wird im Folgenden beispielhaft unter Bezugnahme auf die Zeichnungen beschrieben.
Fig. 1 : ist eine Schnittansicht eines Behälters entsprechend dem Stand der Technik.
Fig. 2 : ist eine Schnittansicht eines Behälters ohne Versteifung des Bodens der Unterschale.
Fig. : ist eine Schnittansicht eines erfindungsgemäßen Behälters.

### Detaillierte Beschreibung der Erfindung

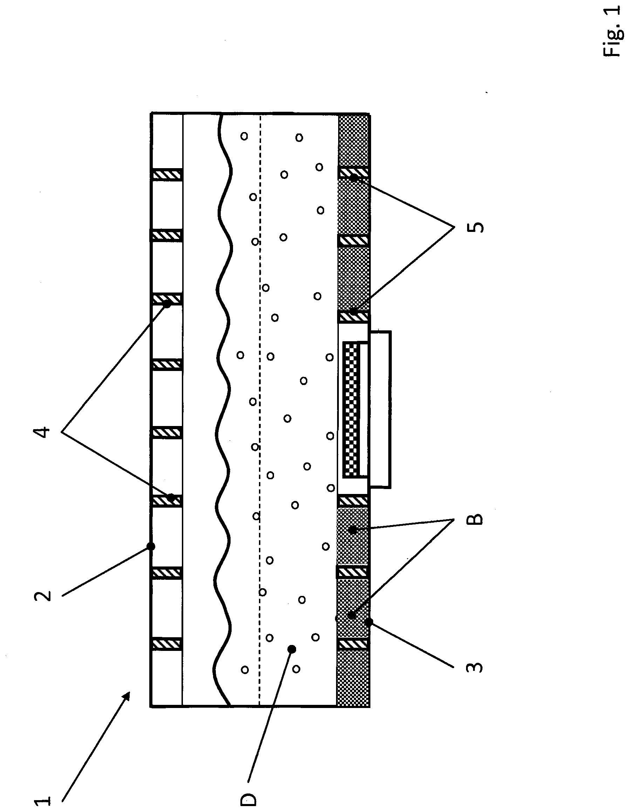

In Fig. 1 ist ein Behälter 1 für Harnstofflösungen D, wie im Stand der Technik bekannt, im Schnitt dargestellt. Der Boden der Unterschale 3, sowie die Abdeckfläche der Oberschale 2 weisen Versteifungsrippen 4,5 auf. Die Versteifungsrippen 5 der Unterschale bilden mit dem Boden der Unterschale 3 kleine Behältnisse, wodurch bei Entleerung des Behälters die Restmenge B nicht entnommen werden kann.

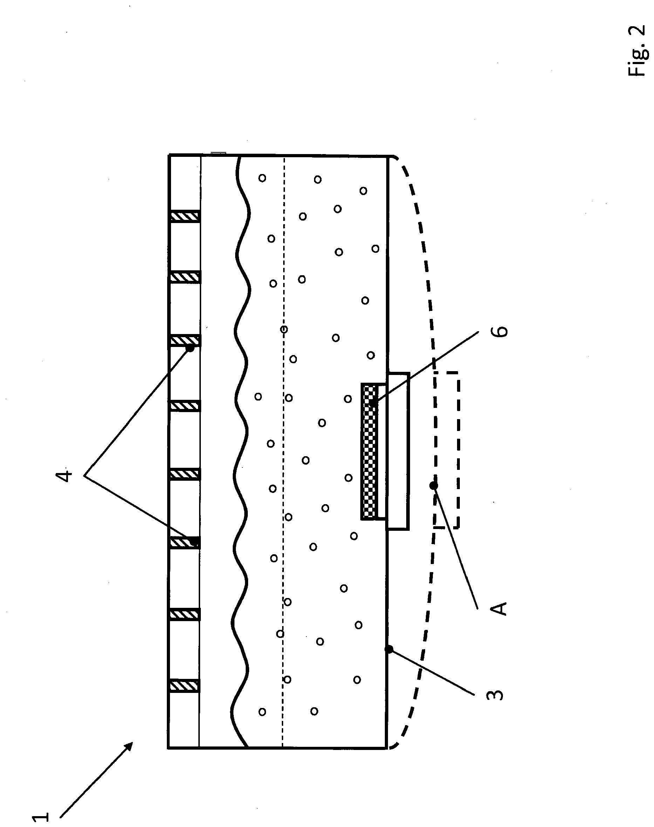

Fig. 2 zeigt eine Schnittansicht von einem Behälter 1, wobei der Boden der Unterschale 3 keine Versteifungsrippen 5 aufweist. Dadurch kann sich der Boden der Unterschale 3 vor allem bei vollem Behälter 1 und bei eingeschalteter Heizung 6, wie durch die strichlierte Linie dargestellt eine Durchhängung A bilden, wodurch unter Umständen eine gesetzlich geforderte Bodenfreiheit bei Kraftfahrzeugen nicht gehalten werden kann, wenn der Behälter 1 am Unterboden eines Kraftfahrzeugs angeordnet ist.

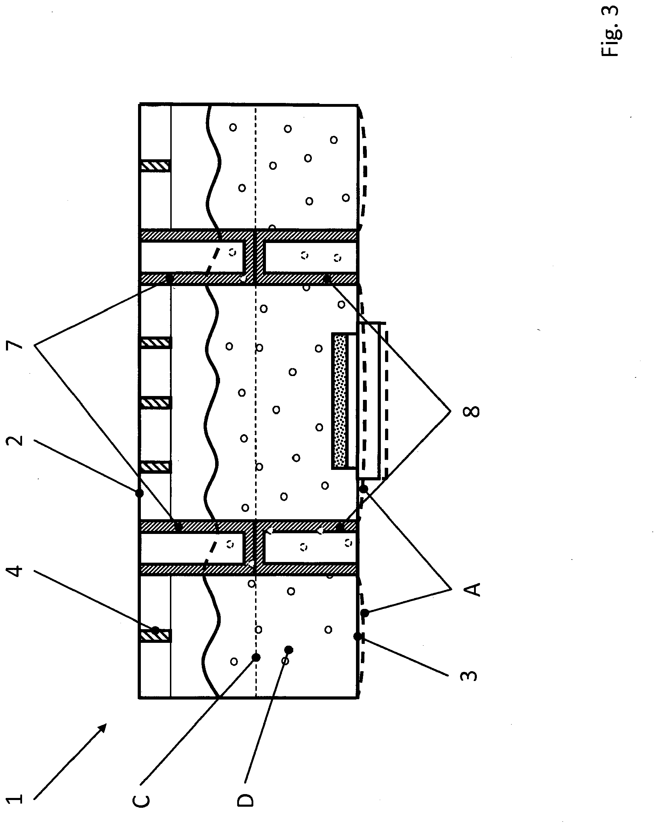

Erfindungsgemäß wird in Fig. 3 ein Behälter 1 dargestellt, der einerseits die erforderliche Steifigkeit des Behälters 1 erreicht, wobei aus dem Behälter 1 trotzdem fast vollständig die Harnstofflösung D entnehmbar ist, indem obere säulenartige Strukturen 7 und untere säulenartige Strukturen 8 in der Oberschale 2 bzw. in der Unterschale 3 ausgebildet sind. Aufgrund der Anordnung der oberen säulenartigen Struktur 7 und der unteren säulenartigen Struktur 8 ergibt sich nur eine kleine Durchhängung A. Oberschale 2 und Unterschale 3 sowie die obere säulenartige Struktur 7 und die untere säulenartige Struktur 8 haben im Wesentlichen die gleiche Schweißebene C.

### Bezugszeichenliste

1 : Behälter
2 : Oberschale
3 : Unterschale
4 : Versteifungsrippen
5 : Versteifungsrippen
6 : Heizung
7 : obere säulenartige Struktur
8 : untere säulenartige Struktur
A : Durchhängung
B : Restmenge
C : Schweißebene
D : Harnstofflösung

## Patentansprüche

1. Behälter (1) für eine Harnstofflösung (D), umfassend eine Oberschale (2) und eine Unterschale (3) sowie eine zum Temperieren der Harnstofflösung (D) ausgebildete Heizung (6),
**dadurch gekennzeichnet, dass** die Oberschale (2) obere säulenartige Strukturen (7) aufweist, und wobei die Unterschale (3) untere säulenartige Strukturen (8) aufweist, wobei die oberen säulenartigen Strukturen (7) und die unteren säulenartigen Strukturen (8) sich gegenüberliegend angeordnet sind, so dass durch das Fügen der Oberschale (2) und der Unterschale (3) die sich gegenüberliegenden oberen säulenartigen Strukturen (7) und die unteren säulenartigen Strukturen (8), zur Erhöhung der Steifigkeit des Behälters (1), dauerhaft miteinander verbunden sind, wobei die unteren säulenartigen Strukturen im Bereich der Heizung angeordnet sind, wobei die unteren säulenartigen Strukturen in gleichmäßigen Abständen um die Heizung (6) verteilt sind.

2. Behälter (1) für eine Harnstofflösung (D) nach Anspruch 1,
**dadurch gekennzeichnet, dass** die Oberschale (2) und die Unterschale (3) aus Kunststoff hergestellt sind.

3. Behälter (1) für eine Harnstofflösung (D) nach Anspruch 1 oder 2,
**dadurch gekennzeichnet, dass** die Oberschale (2) und die Unterschale (3) durch Spritzgießen hergestellt sind.

4. Behälter (1) für eine Harnstofflösung (D) nach zumindest einem der vorhergehenden Ansprüche,
**dadurch gekennzeichnet, dass** die Oberschale (2) und die Unterschale (3) sowie die sich gegenüberliegenden oberen säulenartigen Strukturen (7) und unteren säulenartigen Strukturen (8) durch Verschweißen miteinander verbunden sind.

5. Behälter (1) für eine Harnstofflösung (D) nach zumindest einem der vorhergehenden Ansprüche,
**dadurch gekennzeichnet, dass** die Heizung (6) mittig im Boden der Unterschale (3) angeordnet ist.

6. Behälter (1) für eine Harnstofflösung (D) nach zumindest einem der vorhergehenden Ansprüche,
**dadurch gekennzeichnet, dass** die oberen säulenartigen Strukturen (7) und/oder unteren säulenartigen Strukturen (8) hohl ausgebildet sind.

7. Behälter (1) für eine Harnstofflösung (D) nach zumindest einem der vorhergehenden Ansprüche,
**dadurch gekennzeichnet, dass** die oberen säulenartigen Strukturen (7) integral mit der Oberschale (2) und/oder die unteren säulenartigen Strukturen (8) integral mit der Unterschale (3) ausgebildet sind.

8. Verfahren zur Herstellung eines Behälters (1) für eine Harnstofflösung (D) nach zumindest einem der vorhergehenden Ansprüche, **gekennzeichnet durch** die Schritte:
- Bereitstellen einer Oberschale (2) und einer Unterschale (3), wobei die Oberschale (2) obere säulenartige Strukturen aufweist (7) und wobei die Unterschale (3) untere säulenartige Strukturen (8) aufweist;
- Fügen der Oberschale (2) und der Unterschale (3) durch Verschweißen, wobei umlaufende Flansche der Oberschale und der Unterschale und Kontaktflächen der oberen säulenartigen Strukturen sowie der unteren säulenartigen Strukturen erwärmt werden, wobei nach dem Erwärmen die erwärmten Flansche der Oberschale gegen die erwärmten Flansche der Unterschale gedrückt werden, wobei die oberen säulenartigen Strukturen (7) in Kontakt mit den unteren säulenartigen Strukturen (8) gebracht werden, so dass die Oberschale (2) und die Unterschale (3) sowie die oberen säulenartigen Strukturen (7) und die unteren säulenartigen Strukturen (8) dauerhaft verbunden werden.

9. Verfahren zur Herstellung eines Behälters (1) für eine Harnstofflösung (D) nach Anspruch 8,
**dadurch gekennzeichnet, dass** die Oberschale (2) und die Unterschale (3) im Spritzgussverfahren hergestellt werden.

10. Verfahren zur Herstellung eines Behälters (1) für eine Harnstofflösung (D) nach Anspruch 8,
**dadurch gekennzeichnet, dass** eine Heizung (6) mittig im Boden der Unterschale (3) angeordnet ist.

## Claims

1. Container (1) for a urea solution (D), comprising an upper shell (2), a lower shell (3) and a heater (6) designed for controlling the temperature of the urea solution (D),
**characterized in that** the upper shell (2) has upper pillar-type structures (7), and wherein the lower shell (3) has lower pillar-type structures (8), wherein the upper pillar-type structures (7) and the lower pillar-type structures (8) are arranged opposite one another, with the result that the mutually opposite upper pillar-type structures (7) and lower pillar-type structures (8) are permanently connected to one another by joining the upper shell (2) and the lower shell (3) in order to increase the stiffness of the container (1), wherein the lower pillar-type structures are arranged in the region of the heater, wherein the lower pillar-type structures are evenly spaced around the heater (6).

2. Container (1) for a urea solution (D) according to Claim 1,
**characterized in that** the upper shell (2) and the lower shell (3) are produced from plastic.

3. Container (1) for a urea solution (D) according to Claim 1 or 2,
**characterized in that** the upper shell (2) and the lower shell (3) are produced by injection moulding.

4. Container (1) for a urea solution (D) according to at least one of the preceding claims, **characterized in that** the upper shell (2), the lower shell (3) and the mutually opposite upper pillar-type structures (7) and lower pillar-type structures (8) are connected to one another by welding.

5. Container (1) for a urea solution (D) according to at least one of the preceding claims, **characterized in that** the heater (6) is arranged centrally in the bottom of the lower shell (3).

6. Container (1) for a urea solution (D) according to at least one of the preceding claims, **characterized in that** the upper pillar-type structures (7) and/or the lower pillar-type structures (8) are of hollow design.

7. Container (1) for a urea solution (D) according to at least one of the preceding claims, **characterized in that** the upper pillar-type structures (7) are formed integrally with the upper shell (2) and/or the lower pillar-type structures (8) are formed integrally with the lower shell (3).

8. Method for producing a container (1) for a urea solution (D) according to at least one of the preceding claims, **characterized by** the following steps:
- provision of an upper shell (2) and of a lower shell (3), wherein the upper shell (2) has upper pillar-type structures (7) and wherein the lower shell (3) has lower pillar-type structures (8) ;
- joining the upper shell (2) and the lower shell (3) by welding, wherein peripheral flanges of the upper shell and lower shell and contact surfaces of the upper pillar-type structure and the lower pillar-type structures are heated, with the heated flanges of the upper shell being pressed against the heated flanges of the lower shell after the heating process, wherein the upper pillar-type structures (7) are brought into contact with the lower pillar-type structures (8), with the result that the upper shell (2) and the lower shell (3) as well as the upper pillar-type structures (7) and the lower pillar-type structures (8) are permanently connected.

9. Method for producing a container (1) for a urea solution (D) according to Claim 8,
**characterized in that** the upper shell (2) and the lower shell (3) are produced by injection moulding.

10. Method for producing a container (1) for a urea solution (D) according to Claim 8,
**characterized in that** a heater (6) is arranged centrally in the bottom of the lower shell (3).

## Revendications

1. Récipient (1) pour une solution d'urée (D), comprenant une coque supérieure (2) et une coque inférieure (3) ainsi qu'un chauffage (6) constitué pour tempérer la solution d'urée (D), **caractérisé en ce que** la coque supérieure (2) comporte des structures supérieures en forme de colonne (7) et la coque inférieure (3) comporte des structures inférieures en forme de colonne (8), les structures supérieures en forme de colonne (7) et les structures inférieures en forme de colonne (8) étant disposées opposées de telle manière que par l'assemblage de la coque supérieure (2) et de la coque inférieure (3), les structures supérieures en forme de colonne (7) et les structures inférieures en forme de colonne (8) se faisant face sont reliées l'une à l'autre de manière permanente pour augmenter la rigidité du récipient (1), les structures inférieures en forme de colonne étant disposée dans la zone du chauffage, les structures inférieures en forme de colonne étant répartis uniformément autour du chauffage (6) .

2. Récipient (1) pour une solution d'urée (D) selon la revendication 1, **caractérisé en ce que** la coque supérieure (2) et la coque inférieure (3) sont fabriquées en matière plastique.

3. Récipient (1) pour une solution d'urée (D) selon la revendication 1 ou 2, **caractérisé en ce que** la coque supérieure (2) et la coque inférieure (3) sont fabriquées par moulage par injection.

4. Récipient (1) pour une solution d'urée (D) selon au moins l'une quelconque des revendications précédentes, **caractérisé en ce que** la coque supérieure (2) et la coque inférieure (3) ainsi que les structures supérieures en forme de colonne (7) et les structures inférieures en forme de colonne (8) se faisant face, sont reliées entre elles par soudage.

5. Récipient (1) pour une solution d'urée (D) selon au moins l'une quelconque des revendications précédentes, **caractérisé en ce que** le chauffage (6) est disposé au centre dans le fond de la coque inférieure (3).

6. Récipient (1) pour une solution d'urée (D) selon au moins l'une quelconque des revendications précédentes, **caractérisé en ce que** les structures supérieures en forme de colonne (7) et/ou les structures inférieures en forme de colonne (8) sont constituée creuse.

7. Récipient (1) pour une solution d'urée (D) selon au moins l'une quelconque des revendications précédentes, **caractérisé en ce que** les structures supérieures en forme de colonne (7) sont constituée de manière intégrale avec la coque supérieure (2) et/ou les structures inférieures en forme de colonne (8) sont constituée de manière intégrale avec la coque inférieure (3).

8. Procédé destiné à la fabrication d'un récipient (1) pour une solution d'urée (D) selon au moins l'une quelconque des revendications précédentes, **caractérisé par** les étapes suivantes :
- préparation d'une coque supérieure (2) et d'une coque inférieure (3), la coque supérieure (2) comportant des structures supérieures en forme de colonne (7) et la coque inférieure (3) comportant des structures inférieures en forme de colonne (8),
- assemblage de la coque supérieure (2) et de la coque inférieure (3) par soudage, les brides périphériques de la coque supérieure et de la coque inférieure et les surfaces de contact des structures supérieures en forme de colonne ainsi que les structures inférieures en forme de colonne étant chauffées, les brides chauffées de la coque supérieure étant appuyées après le chauffage contre les brides chauffées de la coque inférieure, les structures supérieures en forme de colonne (7) étant mise en contact avec les structures inférieures en forme de colonne (8) de manière que la coque supérieure (2) et la coque inférieure (3) ainsi que les structures supérieures en forme de colonne (7) et les structures inférieures en forme de colonne (8) sont reliées de façon permanente.

9. Procédé destiné à la fabrication d'un récipient (1) pour une solution d'urée (D) selon la revendication 8 **caractérisé en ce que** la coque supérieure (2) et la coque inférieure (3) sont fabriquées par procédé de moulage par injection.

10. Procédé destiné à la fabrication d'un récipient (1) pour une solution d'urée (D) selon la revendication 8 **caractérisé en ce qu'**un chauffage (6) est disposé au centre dans le fond de la coque inférieure (3).
